# EUROPEAN PATENT APPLICATION

(11) **EP 1 834 711 A1**
(43) Date of publication of application: **19.09.2007**
(21) Application number: 05816732.1
(22) Date of filing: 13.12.2005
(51) Int. Cl.: B09B 5/00, C03B 1/00

(54) **METHOD AND APPARATUS FOR SEPARATING GLASS LEAVES AND INTERMEDIATE FILM FROM CRUSHED GLASS LAMINATE**

(30) Priority: 13.12.2004 JP 2004360076
(71) Applicant: Nippon Sheet Glass Company Limited, Tokyo 108-6321 (JP); Kabushiki Kaisha Omega Techno Modeling, Kanagawa 229-1116 (JP)
(72) Inventor: KURAMOTO, Shunji, K. K. OMEGA TECHNO MODELING, Sagamihara-shi, Kanagawa 229-1116 (JP)
(74) Representative: Wilson Gunn
(86) International application number: PCT/JP2005/022892
(87) International publication number: WO 2006/064815

(57) **Abstract**

An apparatus for separating glass segments and an intermediated film from a crushed laminated glass pane. The apparatus comprises dipping means for dipping the crushed laminated glass transported by means of a mesh conveyor in aqueous solution, stripping means for stripping and collecting the glass segment from the intermediate film while the crushed laminated glass pane transferred from the dipping means being transported by means of a mesh conveyor in the aqueous solution, and rinsing / drying means for rinsing with water and drying the intermediate film transferred from the stripping means while the intermediate film being transported by means of a mesh conveyor.

## Description

### TECHNICAL FIELD

The present invention relates generally to a method and apparatus for separating glass segments and an intermediate film of a laminated glass pane, particularly to a method and apparatus for separating glass segments and an intermediate film from a crushed laminated glass pane.

### BACKFROUND ART

A laminated glass pane is used for building glass panes, vehicle glass pane, and the like, the laminated glass pane being improved in its strength by sandwiching an intermediate film between two glasses. A large amount of waste limited glass panes are generated by discarding building glass panes and vehicle glass panes. Conventional recycling methods of laminated glass panes are known, for example, a method for separating glass segments and an intermediate film by crushing a laminated glass pane and subsequently providing tensile strain to the intermediate film (refer to Japanese Patent Publication No. 181321/2004), and a method for collecting glass segments by crushing a laminated glass pane, swelling an intermediate film carrying crushed glass segments thereon, extending the intermediate film by making a speed for transferring the laminated glass pane by means of a pair of transfer rollers provided at downstream location faster than that by means of a pair of transfer rollers provided at upstream location to strip glass segments from the extended intermediate film ( refer to Japanese Patent Publication No. 326849/2002).

### DISCLOSURE OF THE INVENTION

### PROBLEMS TO BE SPLVED

In the method for stripping glass segments from an intermediate film by crushing a laminated glass pane and extending the crushed laminated glass pane without dipping the crushed laminated glass pane in a separate liquid for the intermediate film, a large size of crushed glass segments may be easily stripped from the intermediate film, but a small size of crushed glass segments (5mm or less in diameter, for example) may not be easily stripped from an intermediate film. Also, in a method for stripping glass segments form an intermediate film by dipping a crushed laminated glass pane in a high-temperature water (80°C or more, for example), the moisture content of the intermediate film is much so that the intermediate film may not be collected in a recyclable manner. It is an object of the present invention is to provide a method and apparatus for separating glass segments and an intermediate film in a small amount of time without causing the problems described above.

### MEANS FOR SOLVING THE PROBLEMS

A first aspect of the present invention is an apparatus for separating glass segments and an intermediate film from a crushed laminated glass pane. The apparatus comprises dipping means for dipping the crushed laminated glass pane aqueous solution, and stripping means for striping the glass segments from the intermediate film while the crushed laminated glass pane being dipped in the aqueous solution.

A second aspect of the present invention is a method for separating glass segments and an intermediate film from a crushed laminated glass pane. The method comprises the step of dipping the crushed laminated glass pane aqueous solution, and stripping the glass segments from the intermediate film while the crushed laminated glass pane being dipped in the aqueous solution.

### EFFECTS OF THE INVENTION

According to the present invention, the separation of glass segments and an intermediate film from a laminated glass pane may be implemented in a small amount of time.

### BRIEF DESCRIPTION OF DRAWINGS

FIG.1 is a perspective view of embodiment of a separating apparatus according to the present invention.
FIG.2 is a sectional view of the separating apparatus in FIG.1.
FIG.3 is a schematic view for illustrating the stripping of glass segments by means of an umbonate roll and metal roll bush.
FIG.4 is a schematic view of an example of stripping means in which only a metal roll brush is used for stripping glass segments.
FIG.5 is a schematic view of another example of stripping means in which a vibration generator is provided at the upstream side of a metal roll brush for mechanical stripping.
FIG.6 is a schematic view of further example of stripping means.
FIG.7 is a schematic view of one example of ladder conveyor.
FIG.7B is schematic view of another example of ladder conveyor.
FIG.8 is schematic view of further example of stripping means.
FIG.9A is schematic view of further example of stripping means.
FIG.9B is schematic view of one structure of protrusion.
FIG.9C is schematic view of another structure of protrusion.
FIG.10A is schematic view of further example of stripping means.
FIG.10B is sectional view taken along X-X line in FIG.10A.

### BEST MODE FOR CARRYING OUT THE INVENTION

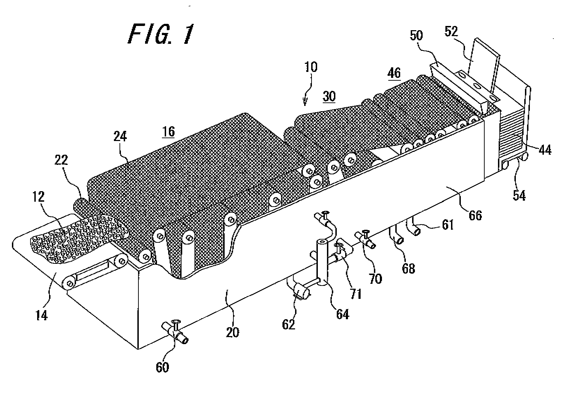

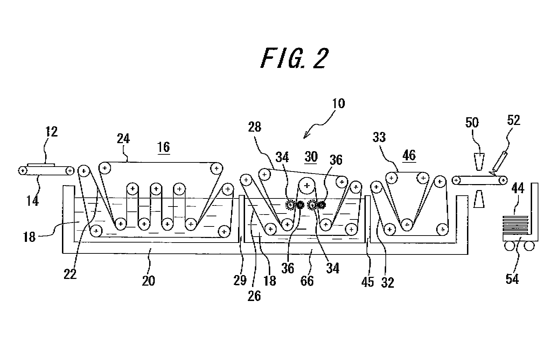

FIG. shows an embodiment of a separating apparatus 10 according to the present invention, and FIG.2 a sectional view of the separating apparatus in FIG. 1. The separating apparatus 10 comprises a dipping zone 16 in which a crushed laminated glass pane 12 is transported with sandwiched between mesh conveyors 22 and 24 and is dipped in an aqueous solution 18; a separating zone 30 in which the crushed laminated glass pane 12 transferred out of the dipping zone 16 is transported with sandwiched between mesh conveyors 26 and 28 in the aqueous solution 18, and the glass segments are stripped from the intermediate film during the transportation of the glass pane to collect the glass segments; and a rinsing / drying zone 46 in which the intermediate film transferred out of the separating zone 30 is transported with sandwiched between mesh conveyors 32 and 33, is rinsed with water and is dried. The dipping zone 16 and separating zone 30 are driven by a wall 29, and the separating zone 30 and rinsing / drying zone 46 by a wall 45. It is noted that the intermediate film to be processed in the separating apparatus is made of polymer materials, for example PVB (polyvinyl butyral) or EVA (ethylene vinyl acetate).

A crusher (not shown) is provided at a stage proceeding to the separating apparatus 10. The laminated glass pane crushed by the crusher in such a manner that the glasses on both sides of the intermediate film are broken in a size of 5-8mm, for example, is transferred to the dipping zone 16 of the separating apparatus 10 through a conveyor 14.

In the dipping zone 16, the overlapped mesh conveyors 22 and 24 are traveling up and down in a meandering manner in a receptacle 20 filled with aqueous solution 18. The aqueous solution 18 is a warm water, for example. Alternatively, the aqueous solution may include at least one type of sulfamic acid, phosphoric acid, compound including fluorine ion, and methyl salicylate, as a separating agent. Alternatively, the aqueous solution may include an alkaline diluting fluid (alkaline treated water of PH11) or may include a surface active agent.

The crushed laminated glass pane 12 is sandwiched between the mesh conveyors 22 and 24 at the entrance of the dipping zone 16, and is dipped in the aqueous solution held at a predetermined temperature, 30-70°C for examples, for 10-15 minutes during a meandering travel of the mesh conveyors. In this period, the aqueous solution 18 is penetrated into between the glass segments and intermediate film so as to facilitate the separation of the glass segments at a post-process. In the dipping zone 16, there is provided a heater (not shown) for heating the aqueous solution. The reason why it is preferable that the temperature of the aqueous solution is in a range of 30-70°C is based on the face that the softening temperature of the intermediate film is required to be 30°Cor more in order to extend easily the softened intermediate film, and if the temperature of the aqueous solution is 70°C or more, the intermediate film is softened too much so that the crushed glass segments are embedded in the intermediate film, resulting in the difficulty of effective separation of the glass segments and intermediate film. More preferable temperature of the aqueous solution is approximately 50°C which is 20°C higher than the softening temperature of the intermediate film.

The aqueous solution is supplied to the receptacle 20 of the dipping zone 16 through a value 60. In order to filter the contamination of the aqueous solution, the aqueous solution is sucked up from the bottom of receptacle 20 by a pump 62, is filtered by a filter 64, and is flowed back to the upper portion of the receptacle 20.

The crushed laminated glass pane 12 is ejected out of the overlapped mesh conveyors 22 and 24 at the exit of the dipping zone 16 and transferred to the separating zone 30.

The crushed laminated glass pane 12 is sandwiched by the mesh conveyors 26 and 28 at the entrance of the separating zone 30, the mesh conveyors being traveling in a meandering manner.

The separating zone 30 is filled with the aqueous solution 18 an well as the dipping zone 16. The aqueous solution is held at a temperature of 30°C-70°C an described above. For this purpose, a heater (not shown) is provided in the separating zone 30.

In the separating zone 30, an umbonate roll 34 and a metal roll brush 36 are provided opposing to each other with interposing the overlapped mesh conveyors 26 and 28 at two locations in the course of the overlapped mesh conveyors.

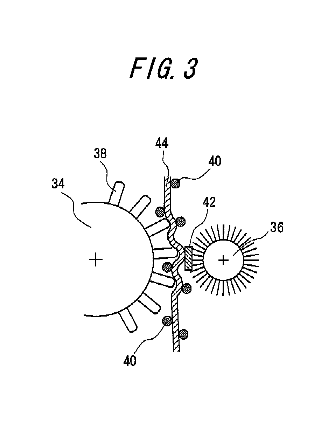

As shown is Fig.3, protrusions 38 of the umbonate roll 34 push the intermediated film 44 carried the glass segments 42 thereon through the mesh of the conveyor (the cross-section thereof is designated by reference numeral 40 in the figure). The glass segments carried on the protruded intermediate film pushed by the protrusion are stripped by means of the metal roll brush 36. While only two sets of the umbonate roll and metal roll brush are shown in FIG.2 to simplify the drawing, four-six sets of them may preferably be provided.

The separated glass segments are deposited on the bottom of a receptacle 66 in the separating zone 30. In order to gather the glass segments at one location on the bottom of the receptacle, the solution flow is formed by supplying further aqueous solution though a pipe 61. The gathered glass segments are exhausted by means of a suction pipe 68 provided at the bottom of the receptacle 66 and are rinsed with water to be collected. A drain pipe 70 exhausts only the aqueous solution at the bottom of the receptacle 66. A connection pipe 71 connects the receptacle 20 of the dipping zone and the receptacle 66 of the separating zone.

In a manner described above, the intermediate film 44 from both sides thereof the glass segments 42 have been stripped is transferred to the rinsing / drying zone 46. At the entrance of the zone 46, the intermediate film 44 is sandwiched between the mesh conveyors 32 and 33 which are traveling in a meandering manner. During this process, the intermediate film 44 is rinsed by means of a washer such as a shower device (not shown), and subsequently is dried by means of a dryer 50. If warm water is used as the aqueous solution, the rinsing by the washer may be omitted.

The dried intermediate film 44 is grasped by a suction device 52 and are stacked on a carriage 54. In this case, if need arises, a polyethylene sheet is inserted between the intermediate sheets so that the films are not adhered to each other.

While one embodiment of the present invention has been described hereinbefore, different types of means for stripping the glass segments from the intermediate film in the separating zone 30 may be considered. The examples of these means will now be described.

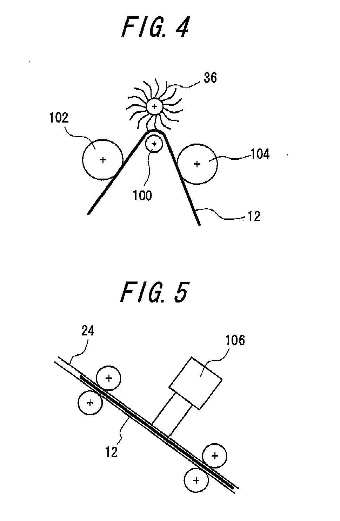

FIG.4 shows an example in which only a metal roll brush is used for stripping the glass segments. In the figure, mesh conveyors are omitted for simplification. Two hold down roll 102 and 14 are arranged on the both sides of one small diameter roll 100 to strip the glass segments by means of the metal roll brush 36 from the crushed laminated glass pane 12 traveling in a convex manner.

FIG.5 shows another example in which a vibration generator 106 is provided at the upstream side of a metal roll brush for mechanical stripping. The vibration generator 106 is arranged in proximity to the crushed laminated glass pane 12 traveling with sandwiched between mesh conveyors 24. The vibration generator may be a vibrator or air-knocker.

While the vibration generator 106 is arranged in proximity to the mesh conveyor 24 in this example, it may be provided at any location in the aqueous solution within the separating zone 30.

Supplying the vibration to the crushed laminated glass pane 12 accelerates the penetration of aqueous solution into between the glass segments and intermediate film so as to facilitate the separation of the glass segments at a post-process. As a method for facilitating the penetration of aqueous solution into between the glass segments and intermediate film, an ultrasonic generator or bubble generator may be utilized. Such ultrasonic generator or bubble generator may be provided at any location in the aqueous solution.

While the glass segments are stripped by means of the metal roller brush, the glass segments may be stripped by extending the crushed laminated glass pane.

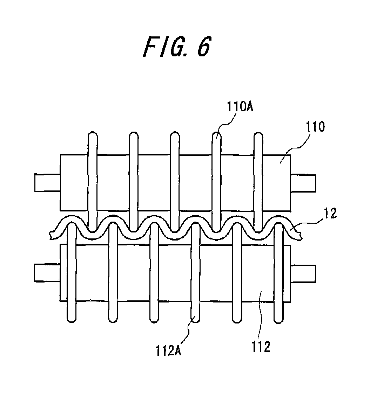

A stripping means based on a principle described above is shown in FIG. 6. In the figure, the stripping means comprises two flanged rolls 110 and 112 arranged opposing to each other. In the figure, the flange of the roll 110 is designated by reference number 110A, and the flange of the roll 112 by reference numeral 112A. Each roll is provided with such flanges at intervals. The flanges 110A and 112A are alternately arranged to engage with each other.

In such stripping means, the crushed laminated glass pane 12 is transported in a direction perpendicular to the surface of the sheet on which FIG.6 is drawn. A ladder conveyor is preferably used for the transportation of the glass pane 12.

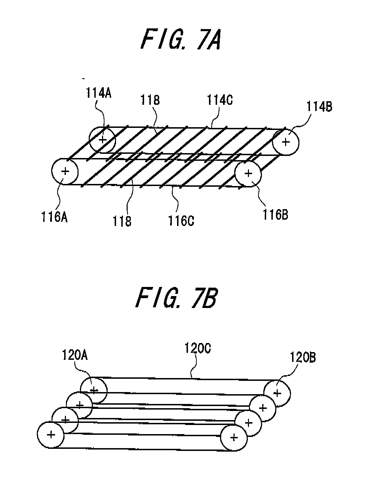

Two typical structures of the ladder conveyor are shown in FIGS. 7A and 7B. The ladder conveyor shown in FIG.7A comprises a chain 114C provided across two roller 114A and 114B, a chain 116C provided across two roller 116A and 116B, and bars 118 (such as round bars and pipes) extended across these chains.

The ladder conveyor shown in FIG.7B comprises a plurality of members 120C arranged in parallel such as chains, ropes, V-belts, wires and the like, the member being provided across two rollers 120A and 120B.

The ladder conveyor in FIG.7B is used for the stripping means shown in FIG.6 to transport the crushed laminated glass pane. In this case, the crushed laminated glass pane is sandwiched between overlapped ladder conveyors, or is mounted on the ladder conveyor. In case that the crushed laminated glass pane is transported up and down as shown in FIG.2, the crushed laminated glass pane is transported with sandwiched between the overlapped ladder conveyors.

In FIG.6, the crushed laminated glass pane 12 transported by the ladder conveyor(s) is inserted between the flanges 110A and 112A rotated with the rolls 110 and 112. At this time, the intermediate film of the crushed laminated glass pane is extended by the engagement of the flange 110A and 112B. The glass segments are stripped from the intermediate film due to the extension of the intermediate film.

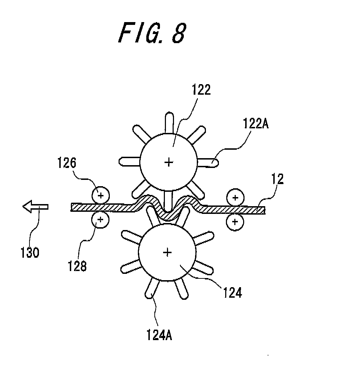

Further example of means for stripping the glass segments by extending the intermediate film is illustrated in FIG.8. Two gears 122 and 124 are used in this example. In the figure, reference numerals 126 and 128 designate holding rollers. The crushed laminated glass pane 12 is transported in a direction shown by an arrow 130. In this case, the ladder conveyor in FIG.7A is utilized.

In this example, the intermediate film is extended by the engagement of respective teeth 122A and 124A of the gears 122 and 124 so that the glass segments are stripped from the intermediate film in the same manner as in FIG.6.

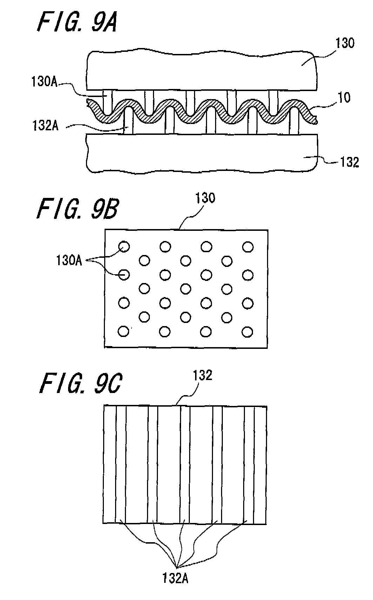

Further example of means for stripping the glass segments by the extension of the intermediate film is shown in FIGS. 9A and 9B and 9C. The stripping means comprises two pressure plates 130 and 132 each having protrusions as shown in FIG.9A. In the figure, the protrusion are designated by reference numerals 130A and 132A.

One example of the protrusion is a convex one as shown in FIG.9B, and another example a toothed one as shown in FIG.9C. These protrusion are arranged so as to be engaged to each other when the pressure plates 130 and 132 are approached.

The crushed laminated glass pane 12 is transported to between the pressure plates 130 and 132 being apart from each other. Subsequently, the pressure plates are repeatedly pressed to each other so that the protrusions 130A and 132A are engaged to each other. As a result, the intermediate film is extended so that the glass segments are stripped from the intermediate film. Alternatively, the pressure plates may be pressed to each other for a predetermined period to hold the extension state of the crushed laminated glass pane for a predetermined period.

In such stripping device, the crushed laminated glass pane is intermittently transported to carry out the stripping process in units of small area of the glass pane. Where the pressure plates are large, the entire of one sheet of the crushed laminated glass pane may be processed at one time.

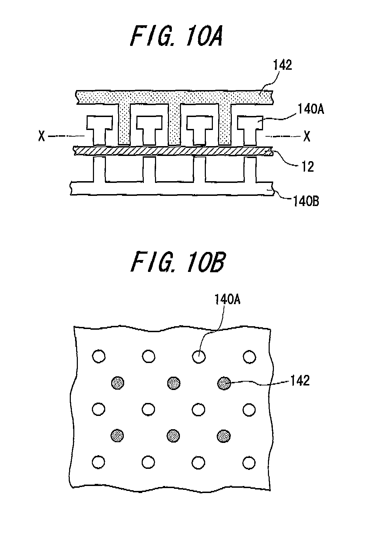

Further example of means for stripping the glass segments by the extension of the intermediate film is shown is FIGS. 10A and 10B. FIG.10A is a sectional side elevation of the means and FIG.10B a sectional view taken along X-X line in FIG.10A.

The stripping means comprises members 140A and 140B for clipping the crushed laminated glass pane 12 at plural positions from both sides thereof, and a pressure member 142 for depressing the clipped glass pane at plural positions other than the clipped positions thereof.

The crushed laminated glass pane 12 is transported to between the clipping members 140A and 140B being apart from each other, and is fixed by clipping the glass pane with the clipping members. In this state, the pressure member 142 is repeatedly pushed down to depress and extend the intermediate film, resulting in the stripping of glass segments from the intermediate film Alternatively, the pressure member 142 may be borne down on the crushed laminated glass pane for a predetermined period to hold the extension state of the glass pane for a predetermined period.

In addition, the pressure members 142 may be provided on both sides of the crushed laminated glass pane 12 (this example is not shown in the figure). In this stripping means, the crushed laminated glass pane is intermittently transported to carry out stripping process in units of small area of the glass pane. Where the pressure member is large, the entire of one sheet of the crushed laminated glass pane may be processed at one time.

### INDUSTRIAL APPLICABILITY

The glass segments and intermediate film separated by means of the method or apparatus according to the present invention for separating the glass segment and intermediate film from the crushed laminated glass pane may be reutilized to glass products as cullet and to a resin material, respectively.

## Claims

1. An apparatus for separating glass segments and intermediate film from a crushed laminated glass pane, comprising:
dipping means for dipping the crushed laminated glass pane in aqueous solution; and
stripping means for stripping the glass segments from the intermediate film while the crushed laminated glass pane being dipped in the aqueous solution.

2. The apparatus according to claim 1, wherein the aqueous solution includes a stripping agent.

3. The apparatus according to claim 2, further comprising rinsing means for rinsing with water the intermediate film from which the glass segments have been stripped.

4. The apparatus according to claim 3, further comprising:
drying means for drying the intermediate film rinsed;
a first transport means for transporting the crushed laminated glass pane to the dipping means; and
a second transport means for transporting the intermediate film from which the glass segments have been stripped to the rinsing means.

5. The apparatus according to claim 4, wherein the first and second transport means are mesh conveyors, respectively.

6. The apparatus according to claim 4, wherein the first and second transport means are ladder conveyors, respectively.

7. The apparatus according to claim 5, wherein the stripping means includes a metal brush for scraping the glass segments so as to be stripped from the intermediate film.

8. The apparatus according to claim 5, wherein the stripping means includes a vibration generator for supplying vibration to the crushed laminated glass pane.

9. The apparatus according to claim 5, wherein the stripping means includes an ultrasonic generator for supplying ultrasonic waves to the crushed laminated glass pane.

10. The apparatus according to claim 5, wherein the stripping means includes a bubble generator for supplying vibration by bubbling to the crushed laminated glass pane.

11. The apparatus according to claim 6, wherein the stripping means includes two flanged rolls each having plural flanges, which are arranged so that the flanges of respective flanged rolls are engaged with each other with sandwiching the crushed laminated glass pane therebetween.

12. The apparatus according to claim 6, wherein the stripping means includes two gears which are arranged so that the teeth of respective gears are engaged with each other with sandwiching the crushed laminated glass pane therebetween.

13. The apparatus according to claim 6, wherein the stripping means includes two pressure plates each having plural protrusions to press the crushed laminated glass pane therebetween.

14. The apparatus according to claim 6, wherein the stripping means includes clipping members for clipping the crushed laminated glass at plural positions from both sides thereof, and a pressure member for depressing the crushed laminated glass pane clipped by the clipping members at plural positions other than the clipped positions thereof.

15. A method for separating glass segments and an intermediate film from a crushed laminated glass pane, comprising the steps of:
dipping the crushed laminated glass pane in aqueous solutions; and
stripping the glass segments from the intermediate film while the crushed laminated glass pane being dipped in the aqueous solutions.

16. The method according to claim 15, wherein the step of stripping includes the step of dressing and extending the crushed laminated glass pane.

17. The method according to claim 15, wherein the step of stripping included the step of repeatedly extending the crushed laminated glass pane.

18. The method according to claim 15, wherein the step of stripping included the step of extending the crushed laminated glass pane and holding its extended state for a predetermined period.
